# EUROPEAN PATENT SPECIFICATION

(11) **EP 2 422 487 B1**
(45) Date of publication and mention of the grant of the patent: **02.08.2017**
(21) Application number: 10734709.8
(22) Date of filing: 22.04.2010
(51) Int. Cl.: H04L 12/12, H04L 12/40, B60R 16/023

(54) **A CABLE SYSTEM WITH SELECTIVE DEVICE ACTIVATION FOR A VEHICLE**
EIN KABELSYSTEM MIT SELEKTIVER GERÄTEAKTIVIERUNG FÜR EIN FAHRZEUG
SYSTÈME DE CÂBLE AVEC ACTIVATION SÉLECTIVE DE DISPOSITIFS POUR UN VÉHICULE

(30) Priority: 22.04.2009 IE 20090318
(43) Date of publication of application: 29.02.2012
(73) Proprietor: Reilly, Patrick, County Cavan (IE)
(72) Inventor: The designation of the inventor has not yet been filed
(74) Representative: Litton, Rory Francis
(86) International application number: PCT/EP2010/055398
(87) International publication number: WO 2010/122128

(56) References cited:
- EP-A2- 1 768 317
- WO-A1-02/23815
- WO-A1-2007/144412
- WO-A2-02/076794
- US-A1- 2004 174 909
- US-A1- 2007 032 933

## Description

### INTRODUCTION

The present invention relates to a cable system for a vehicle. In particular, it relates to a cable system suitable for providing an operative link between a plurality of devices in the vehicle and their associated activation switches, which associated activation switches are spaced apart from the devices, wherein the cable system comprises a wiring loom. The present invention further relates to methods of activation devices within a vehicle using this cable system.

It is well known within the automobile and vehicle industry to use cable systems such as wiring looms or cable harnesses comprising a set of wires or multi-core cables for the transmission of signals and power from a control panel to a number of devices. These cable systems comprise a wire for each device, resulting in large numbers of wires. The sets of wires are bound together using suitable ties.

There are a number of advantages associated with the use of wiring looms, including ease of manipulation and installation of the wiring. There are, however, a number of disadvantages associated with the wiring looms. Their manufacture is complicated and does not lend itself to automation. It therefore requires manual assembly which is a costly process. Furthermore, by providing a wire for each device, large amounts of wiring are used in each loom, which is also quite costly.

In an alternative manner of controlling devices within vehicles it is known to reduce the number of signaling wires, using a form of multiplexing to control the devices. These systems must be implemented using complex and costly electronics. Examples of such systems for selective device activation are given by patent publications US2004/0174909 A1 (2004-09-09), EP1768317 A2 (2007-03-28), WO02/23815 A1 (2002-03-21), US2007/032933 A1 (2007-02-08), WO2007/144412 A1 (2007-12-21) and WO02/076794 A2 (2002-10-03). It is therefore an object of the present invention to provide a cable system that overcomes at least some of the above mentioned problems.

### STATEMENTS OF INVENTION

According to the invention there is provided a cable system for a vehicle, the cable system being suitable for providing an operative link between a plurality of devices in the vehicle and their associated activation switches, which associated activation switches are spaced apart from the devices, the cable system comprising
a wiring loom comprising a single signal wire;
a timer assembly adapted to generate a periodic clock pulse on the signal wire;
for each device, a receiver assembly connectable to the device and a transmitter assembly connectable to the device's associated activation switch, wherein for each device,
   the transmitter assembly is adapted to receive the periodic clock pulse and, on receipt of the clock pulse, to generate one signal pulse on the signal wire after a preset interval when the activation switch is activated; and
   the receiver assembly is adapted to receive the periodic clock pulse and the signal pulse after the preset interval and to activate the device if the signal pulse is present;
wherein the clock pulse and signal pulse are of substantially equal amplitude.

In this way, the cable system of the invention provides a simple and efficient manner for the control of devices within the vehicle, such as lights, motors, heating elements, solenoids, relays, horn, radio/music system, warning buzzers and motorised valves. The use of a single signal wire greatly reduces the quantity of wiring required to control the plurality of the devices within the vehicle, which in turn reduces the complexity of installing the wiring loom. Furthermore, the use of clock and signal pulses having the same amplitude reduces the complexity of hardware required to implement the cable system, as it is not necessary for the receiver assembly or transmitter assembly to include means to differentiate between the amplitude of clock pulses and signal pulses.

Furthermore, the use of clock and signal pulses of the same amplitude eliminates the possibility of confusion between pulses due to variations in voltages on the signal wire. The cable system of the invention is robust with respect to variations in the voltage supply.

In one embodiment of the invention there is provided a cable system in which each transmitter assembly comprises an isolation unit adapted to isolate the transmitter assembly from the signal line between clock pulses. In this way, signal pulses from other transmitter assemblies on the signal wire will not be received by a transmitter assembly and interpreted as a clock pulse.

In an embodiment of the invention there is provided cable system in which the wiring loom consists of a ground wire, a supply wire and the signal wire. This is a particularly effective construction of wiring loom, allowing all devices within the vehicle to be powered and controlled using a simple three wire wiring loom. Furthermore, such a wiring loom would be neither complex nor expensive to create or install.

In another embodiment of the invention there is provided a cable system in which the wiring loom consists of a ground wire and a combined supply and signal wire. In this way, an even simpler construction of wiring loom is provided, with the accompanying advantages of reduced cost and complexity. In this situation, charge pumps may be used to generate the pulses and divider circuits may be used to separate them.

In a further embodiment of the invention there is provided a cable system in which the wiring loom consists of a ground wire and a load supply wire, a control supply wire and signal wire. In this way, the cable system may be used to control one or more devices presenting a large inductive load

In an alternative embodiment of the invention there is provided a cable system in which the timer assembly comprises an astable multivibrator. This is a particularly effective method of providing periodic clock pulse.

In one embodiment of the invention there is provided a cable system in which each transmitter assembly and receiver assembly comprises a monostable multivibrator. This is a particularly effective method of generating a signal pulse, or reference pulse for comparison with a signal pulse.

In another embodiment of the invention there is provided a cable system in which the isolation means comprises a monostable multivibrator. This is a particularly effective method of providing a pulse to isolate the transmitter assembly from the signal wire.

According to the invention there is further a provided a receiver assembly for use with the cable system of the invention comprising
means to receive the clock pulse;
means to receive the signal pulse, of substantially equal amplitude to the clock pulse, after the preset interval; and
means to activate the device on receipt of the signal pulse.

In this way, the receiver assembly may act to operate the required devices on receipt of a suitable signal pulse from the transmitter assembly.

In a further embodiment of the invention there is provided a receiver assembly in which the means to receive the signal pulse comprise means to generate a reference pulse after the preset interval; and means to combine the reference pulse and signal pulse in an AND operation. The use of a reference pulse whose generation is triggered by the same clock pulse as is used to trigger the signal pulse is a convenient manner to ensure that the device is activated on receipt of the appropriately timed signal pulse.

In an alternative embodiment of the invention there is provided a receiver assembly in which the means to generate a reference pulse comprise a first pulse generator adapted to generate a first pulse, on receipt of the clock pulse, of the duration of the preset interval; a second pulse timer adapted to generate a second pulse, on receipt of the clock pulse, of the duration of the preset interval plus a pulse width; and means to combine the first pulse and second pulse in an XOR operation. In this way, the result of the XOR operation is an appropriately timed reference pulse.

According to the invention there is further a provided a transmitter assembly for use with the cable system comprising means to receive the clock pulse; means to generate a signal pulse after a preset interval comprising a first pulse generator adapted to generate a first pulse, on receipt of the clock pulse, of the duration of the preset interval, a second pulse timer adapted to generate a second pulse, on receipt of the clock pulse, of a duration of the preset interval plus a pulse width; and means to combine the first pulse and second pulse in an XOR operation. This is a particularly efficient way of providing a transmitter assembly that can provide a suitably timed signal pulse on the signal wire in response to the clock pulse.

According to the invention there is further a provided a method for controlling a plurality of devices in a vehicle, the method adapted to operate in a vehicle comprising the plurality of devices, each device having an associated activation switch, spaced apart therefrom, the devices and their switches being connected by a wiring loom having a single signal wire, each device being connected to the signal wire by way of a receiver assembly and each activation switch being connected to the signal wire by way of a transmitter assembly, the signal wire being further connected to a timer assembly, the steps of the method comprising
the receiver assembly receiving a periodic clock pulse, having an amplitude, from the timer assembly, on the signal wire;
the receiver assembly reading a signal from the signal wire at a preset interval after the clock pulse;
the receiving assembly ascertaining if a signal pulse is present on the signal wire at the preset interval after the clock pulse;
if a signal pulse is present, the receiving assembly activating the device

In this way, the method of the invention allows for the many devices within the vehicle to be controlled in a simple and efficient manner, using non-complex and easy to install components. The control of the devices is simplified by having a single signal wire for installation, and by requiring components for generating only pulses of a one amplitude.

In one embodiment of the invention there is provided a method in which the step of the receiving assembly ascertaining if a signal pulse is present on the signal wire comprises the receiving assembly generating a reference pulse at the preset interval after the clock pulse; and ascertaining if the reference pulse coincides with a signal pulse on the signal wire. This is a particularly efficient manner of ensuring the device is activated when the correct signal pulse is present on the signal wire.

In another embodiment of the invention there is provided a method in which the step of ascertaining if the reference pulse coincides with a signal pulse on the signal wire comprises combining the reference pulse and the signal on the signal line in an AND operation. This is a particularly efficient manner of combining the signal and reference pulse so as to ensure that the device is activated only when both pulses are present at the same time.

According to the invention there is further a provided a method for controlling a plurality of devices in a vehicle, the method adapted to operate in a vehicle comprising the plurality of devices, each device having an associated activation switch, spaced apart therefrom, the devices and their switches being connected by a wiring loom having a single signal wire, each device being connected to the signal wire by way of a receiver assembly and each activation switch being connected to the signal wire by way of a transmitter assembly, the signal wire being further connected to a timer assembly, the steps of the method comprising
the timer assembly transmitting a periodic clock pulse, having an amplitude, on the signal wire,
then for each transmitter assembly and receiver assembly pair,
   the transmitter assembly receiving the clock pulse and transmitting a signal pulse, of substantially the same amplitude, on the signal wire, a preset interval after the clock pulse;
   the receiver assembly receiving the clock pulse and reading a signal from the signal wire, a preset interval after the clock pulse;
      wherein the preset interval is the same for the transmitter assembly and receiver assembly pair within a pair,
   the receiving assembly ascertaining if a signal pulse is present on the signal wire at the preset interval after the clock pulse;
   if a signal pulse is present, the receiving assembly activating the device.

In this way, the method of the invention allows a chosen device to be activated by the activation switch causing a signal pulse to be placed on the signal wire at a predetermined timeslot, which pulse is then read by the receiver assembly. This is a particularly efficient and simple manner of controlling the many devices within a vehicle.

In one embodiment of the invention there is provided a method in which the step of the receiving assembly ascertaining if a signal pulse is present on the signal wire comprises the receiving assembly generating a reference pulse at the present interval after the clock pulse; and ascertaining if the reference pulse coincides with a signal pulse on the signal wire. This is a particularly efficient manner of ensuring the device is activated when the correct signal pulse is present on the signal wire.

In another embodiment of the invention there is provided a method in which the step of ascertaining if the reference pulse coincides with a signal pulse on the signal wire comprises combining the reference pulse and the signal on the signal wire in an AND operation. This is a particularly efficient manner of combining the signal and reference pulse so as to ensure that the device is activated only when both pulses are present at the same time.

According to further aspect of the invention there is provided a device for use in a vehicle comprising the receiver assembly of the invention. By incorporating the receiver assembly into devices, the device or vehicle manufacturer can ensure that only suitable replacement devices are be sold, as replacement devices without the receiver assembly of the invention would not work in vehicles using the cable system of the invention.

### DETAILED DESCRIPTION OF THE INVENTION

The invention will now be more clearly understood from the following description of an embodiment thereof given by way of example only with reference to the accompanying drawings in which:-
Fig. 1 is a block diagram of the system according to the invention;
Fig. 2 is a diagrammatic representation of a wiring loom according to the invention;
Fig. 3 is a circuit schematic of a timer assembly according to the invention;
Fig. 4 is a circuit schematic of a transmitter assembly according to the invention;
Fig. 5 is a circuit schematic of a receiver assembly according to the invention;
Fig. 6 is a circuit schematic of an alternative embodiment transmitter assembly according to the invention
Fig. 7 is a timing diagram for the operation of the system according to the invention;

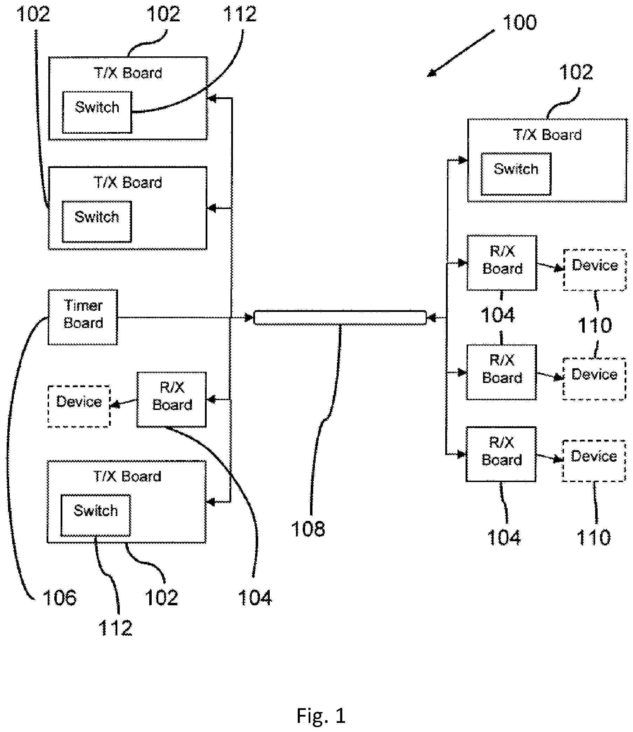

Referring to the drawings, and initially to Fig. 1 thereof, there is shown a cable system 100, comprising a plurality of transmitter assemblies 102, a plurality of receiver assemblies 104, a timer assembly 106 and a wiring loom 108 connected between the transmitter assemblies 102 and receiver assemblies 104. Each receiver assembly 104 is connected to an electrically operated device 110. Each device 110 is controlled by an activation switch 112 which is forms part of the associated transmitter assembly 102 of the cable system 100.

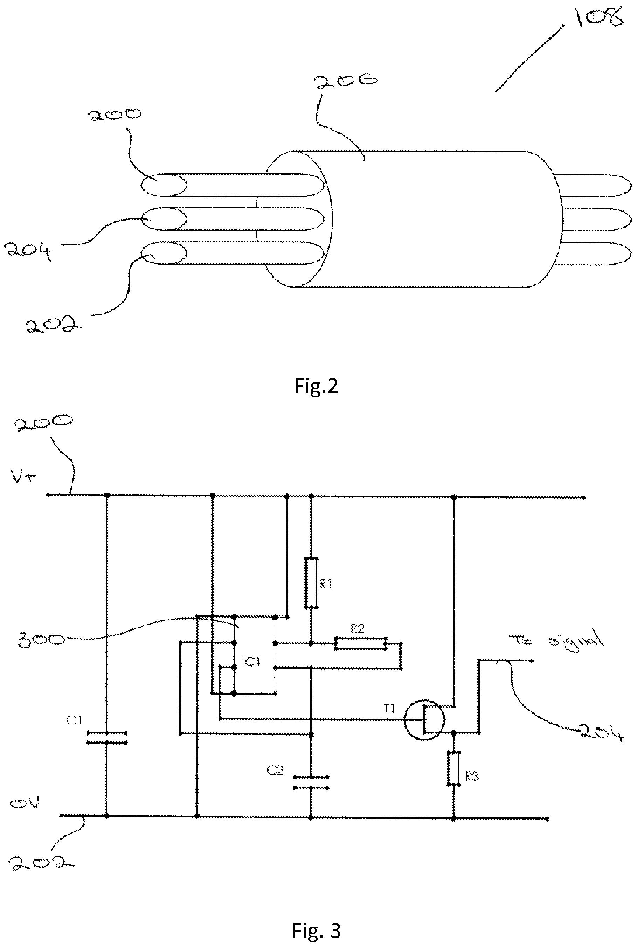

Referring now to Fig. 2, there is shown the wiring loom 108 of Fig. 1 which consists of three wires, a supply wire 200 and ground wire 202 for supplying power to the devices 110 and a signal wire 204 for signalling to the device 110 when to turn on or off. The three wires 200, 202, 204 are comprised within a single sleeve 206.

Referring now to Fig. 3, in which like parts have been given the same reference numerals as before, there is shown a circuit schematic of the timer assembly, indicated generally by the reference numeral 106, comprising the supply wire 200 labelled 'V+', the ground wire 202 labelled '0V'. The timer assembly 106 further comprises an astable multivibrator 300 comprising a 555 timer IC 300 connected to a number of suitable timing resistors and capacitors. The astable multivibrator generates a pulse of duration *t* with a period *T*. The output of the astable multivibrator is supplied to the signal wire 204. In this case, the values of the components are as follows: R1 is a 22 kΩ resistor, R2 is a 386 Ω resistor and R3 is 10 kΩ resistor; C1 is a 100nF capacitor, C2 is a 3.3 µF capacitor and T1 is a P-channel MOSFET. The timing components have been chosen such that the astable multivibrator operates at 20 Hz, generating a pulse where *t =* 1 ms and *T =* 50 ms. In this way, the timing assembly generates a 1 ms clock pulse on the signal line every 50 ms.

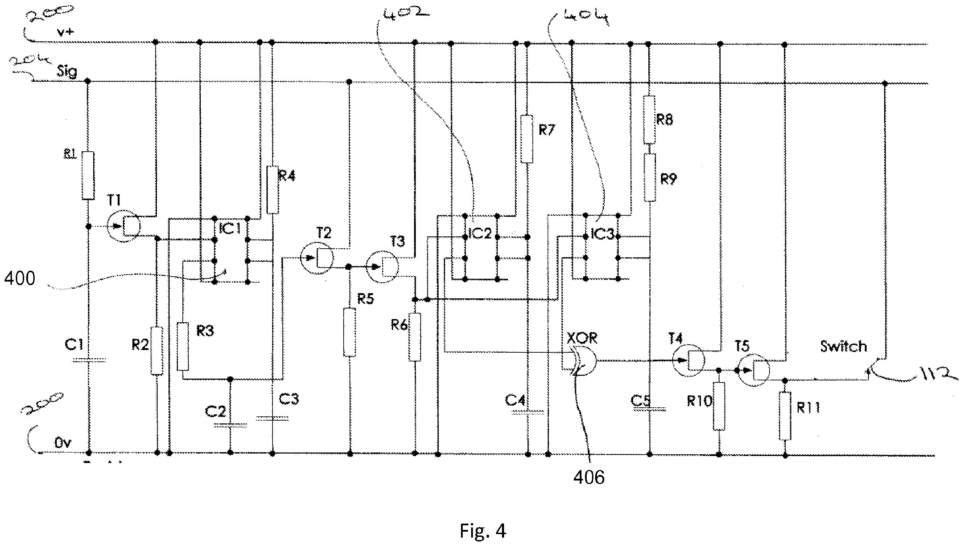

Referring now to Fig. 4, in which like parts have been given the same reference numerals as before, there is shown a circuit schematic of a transmitter assembly 102 according to the invention showing the supply wire 200 labelled 'V+', the ground wire 202 labelled 'or' and the signal wire 204 labelled 'Sig'. The system of the invention will operate correctly with a V+ of between 6V and 15V. The transmitter assembly 102 comprises an isolation timer 400 which includes a 555 timer IC configured as a monostable multivibrator; a first pulse timer 402 which includes a 555 timer IC configured as a monostable multivibrator; and a second pulse timer 404 which includes a 555 timer IC configured as a monostable multivibrator. The resistance values used in this example are as follows: R1 is 1.2 kΩ, R2 is 10 kΩ, R3 is 1 kΩ, R4 is 180 kΩ, R5 is 10 kΩ, R6 is 10 kΩ, R7 are R8 are selected to implement the required pulse placement, R9 is kΩ, R10 is 10 kΩ, and R11 is 10 kΩ. The capacitance values used in this example are as follows: C1 is 2.2 nF, C2 is 3.3 µF, C3 is 220 nF, C4 is 220 nF and C5 is 220 nF. Transistors T1 to T5 are all P-channel MOSFETSs. The timing components of the isolation timer 400 are chosen such that, when triggered by the falling edge of the clock pulse on the signal line, the isolation timer 400 generates an isolation pulse of duration *T-t, in* this case 50 - 1 = 49 ms. The first pulse timer 402 and second pulse timer 404 are also triggered by the falling edge of the clock pulse and their timing components are chosen such that the second pulse timer 404 will generate a pulse of duration *P2* that is *t* seconds, in this case one millisecond, longer than the pulse of duration *P1* generated by the first pulse timer 402 i.e. *P1 + t = P2.* The outputs of the first pulse timer 402 and second pulse timer 404 are then put through an Exclusive OR gate 406 generating a signal pulse of duration *t* at a time *P1* after the clock pulse is generated. In this way, by varying the values of the timing components of the monostable multivibrators 402, 404 a signal pulse of duration *t* may be generated at any interval within the period *T* of the astable multivibrator of the timer assembly 106. The signal pulse generated by the XOR gate 406 is transmitted to the signal wire 204 when the activation switch 112 is closed, the activation switch 112 being connected between the XOR gate 406 and the signal line 204.

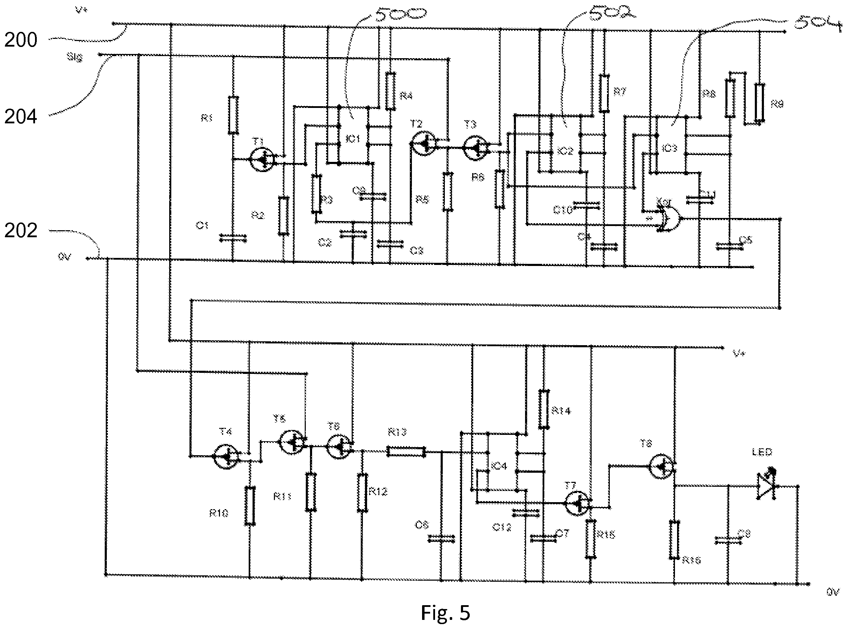

Referring now to Fig. 5, in which like parts have been given the same reference numerals as before, there is shown a circuit schematic of a receiver assembly 102 according to the invention showing the supply wire 200 labelled 'V+', the ground wire 202 labelled 'or' and the signal wire 204 labelled 'Sig'. The receiver board comprises the same components as the transmitter board including receiver isolation timer 500, a receiver first pulse timer 502 and a receiver second pulse timer 504 such that a reference pulse of duration *t* is generated on the receiver board at time *P1* in response to the falling edge of the clock pulse on the signal line. This signal is used as a reference signal on the receiver board and is then combined with the incoming signal line 204 by way of an 'AND' operation such that the result of the combination will only provide a pulse if the reference pulse from the receiver board coincides with the signal pulse that has been generated on the signal line by the transmitter assembly. The pulse generated by the AND operation is then supplied to the device to be operated, thus switching it on.

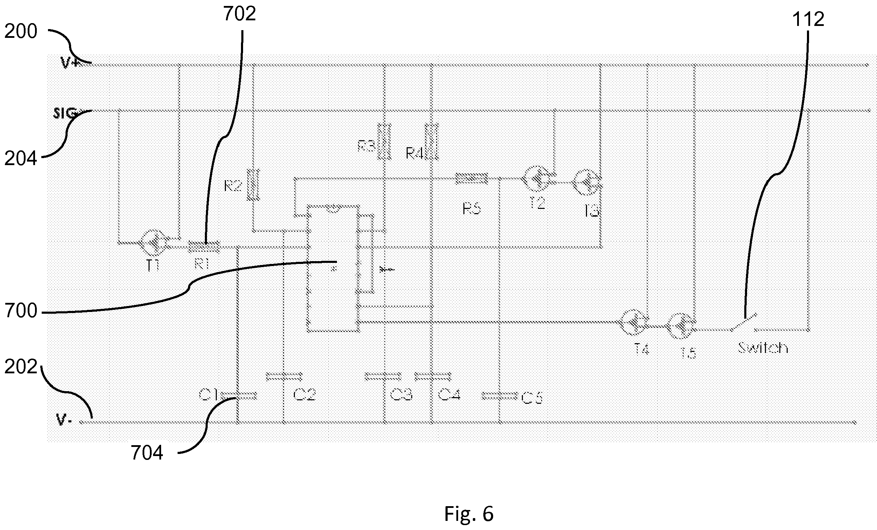

Referring now to Fig. 6, in which like parts have been given the same reference numerals as before, there is shown a circuit schematic for an alternative embodiment of the transmitter assembly, comprising a 558 timer IC 700. This is a quad version of the 555 timer, and therefore provides for a reduced footprint in the design. The pin-out of this chip is as follows: pins 3, 6, 11, and 14 are trigger pins; pins 2, 7, 10 and 15 are timing pins and pins 1, 8, 9 and 16 are the output pins. One timer in the package acts as the isolation timer, while a second timer acts as to provide a timing pulse whose falling edge triggers a third timer to generate a signal pulse for transmission to the receiver assembly. The values for the components are as follows: R2 is 180 kΩ; R3 is chosen according to the desired signal pulse position; and R4 is 3 kΩ. C2, C3 and C4 are each 200 nF, while T1, T2, T3, T4 and T5 are all P-channel MOSFETs.

This embodiment further comprises a pair of simple R-C low pass filters. The first low pass filter comprises R1 702, having resistance of 1.2 kΩ, and C1 704, having a capacitance of 2.2. nF, giving a time constant of 2.64 µs. The first low pass filter interacts with the incoming pulse on the signal wire 204. The second low pass filter comprises R5, having a resistance of 1 kΩ, and C5 having a capacitance of 2.2 µF, giving a time constant of 2.2 ms. The second low pass filter interacts with the isolation timer, which is triggered on the falling edge of the clock pulse, delaying its isolation affect on the reference timer so as to ensure that the reference timer is triggered before it is isolated. Filters having such relatively large time constants facilitate the low-frequency operation of the cable system of the invention. The low pass filters help prevent voltage spikes interfering with the operation of the system, and have the added advantage of shaping the pulses so as to reduce electromagnetic emissions. The pull-up resistors on all outputs, and the pull-down resistors on all MOSFET drains, have been omitted from this diagram. It will be understood that the implementation shown in Fig. 6 may be used in the receiver assembly for the generation of the reference pulse. It will be understood that the low pass filters are not limited to use with the embodiment illustrated in Fig. 6, but may be used with other embodiments as well.

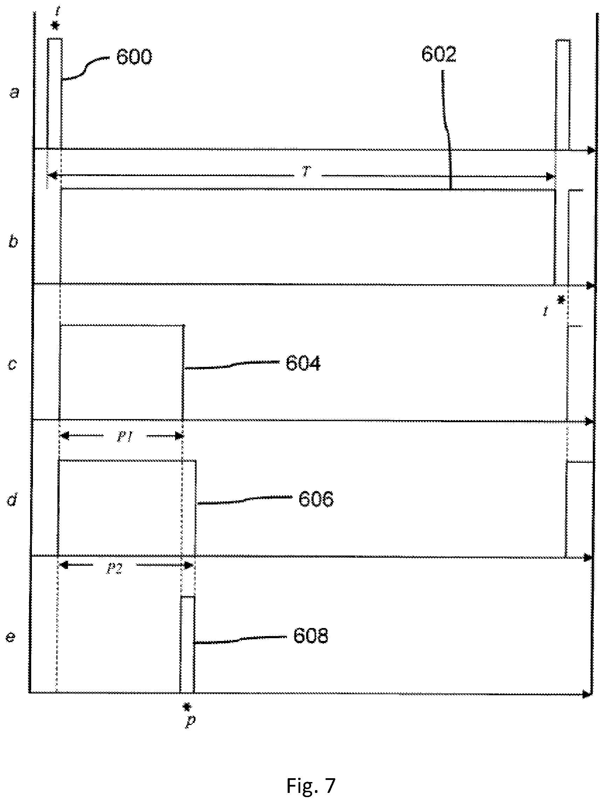

Referring now to Fig. 7, there is shown a timing diagram for the operation of a device using the system of the invention, including the transmitter assembly of Fig. 4 and the receiver assembly of Fig. 5. Plot a illustrates the clock pulse 600, of duration *t* and period *T,* generated on the signal wire. Plot *b* illustrates the isolation pulse 602, of duration *T-t,* generated by the isolation timer 400, when triggered by the falling edge of the clock pulse of plot *a.* Plot *c* illustrates the first timer pulse 604 of duration *P1* generated by the first pulse timer 402, 502. Plot *d* illustrates the second timer pulse 606 of duration *P1 + p = P2* generated by the second pulse timer 404, 504 in response to the clock pulse 600. Plot *e* illustrates the signal pulse 608, of duration *p* that is generated when the first timer pulse 604 and second timer pulse 606 are XORed together. The amplitude of each pulse is substantially similar. These substantially equal amplitudes will be maintained as long as the supply voltage remains substantially within the range 6V to 15V. This provides a versatile system that is not limited to a narrow range of acceptable supply voltages.

In use, the cable system 100 is installed in a vehicle (not shown) such that each transmitter assembly 102 is connected to the activation switch 112 for controlling a device 110 and each receiver assembly 104 is connected to a device 110. The wiring loom 108 consisting of the supply wire 200, ground wire 202 and signal wire 204 is connected between the transmitter assemblies 102 and the receiver assemblies 104, and is further connected to the timer assembly 106. The wiring loom 108 is connected in such a way that each transmitter assembly 102, receiver assembly 104 and timer assembly 106 is connected to the signal wire 204. In this way, the clock pulse generated by the astable multivibrator of the timer assembly 106 will be transmitted along the signal wire 204 to each transmitter assembly 102 and each receiver assembly 104. In each of the transmitter and receiver assemblies, the clock pulse will trigger the isolation timer, first pulse timer 402 and second pulse timer 404. Triggering the isolation timer of a particular assembly ensures that that assembly will be isolated from any further activity on the signal wire until the next clock pulse is generated. Triggering the first pulse timer 402, 502 and second pulse timer 404, 504 of a particular assembly generates a single pulse of duration *p* at a pre-determined time during the period *T* of the timer assembly. In the diagram, the duration *t* of the clock pulse is the same as the duration *p* of the signal pulse. While this is a convenient arrangement, it is not a requirement of the invention. As it is the falling edge of the clock pulse that triggers the other components in the invention, the length *t* of the clock pulse is not particularly important, as long as there is only one falling edge per period *T*. Additionally, it will be understood that the signal pulse should not be too narrow so that minor variations in pulse positioning due to component values are tolerated by the system. It will be understood that the aim of the invention is provide a simple control mechanism that does not require complex components and assembly. Ideally, the invention will operate well using components having 5% tolerance values.

If a user wishes to operate a specific device on a vehicle, he will operate the appropriate the activation switch 112 for that device on the transmitter assembly 102 connected to that activation switch 112, thus allowing the signal pulse generated by that transmitter assembly 102 to be transmitted to the signal wire 204. That signal pulse will travel along the signal wire to the receiver assemblies wherein the data on the signal wire is ANDed together with the output from the receiver first pulse timer 402 and the receiver second pulse timer 404 such that only if the signal pulse on the signal line corresponds with the reference pulse generated on the receiver assembly will the device be activated. It will be understood that the activation switch 112 for each device may be directly located on the transmitter assembly 102, or it may be a separate switch connected thereto. For example, if the cable system of the invention was used to control a device on a trailer attached to a primary vehicle, the activation switch 112 would correspond to an indirect switching arrangement connected between the primary vehicle and the trailer.

Once activated, each device will remain activated as long as signal pulses continue to be generated by the transmitter assembly 102 during the period of each clock pulse. Once the activation switch 112 is deactivated, the signal pulses of the transmitter assembly 102 will no longer reach the signal wire 204, and will consequently not reach the receiver assembly 104. The receiver assembly 104 will then receive a false response to its AND combination of the data on the signal line 204 at the predetermined time and its own reference pulse and will consequently deactivate the device 110.

In each clock period, each transmitter assembly 102 and receiver assembly 104 generates their respective signal pulses and reference pulses, however, if the activation switch 112 is not activated, then the signal pulse of the transmitter assembly 102 will not be transmitted on the signal wire, and will therefore not be present on the signal line 204 for combination with the reference pulse of the appropriate receiver assembly 104. Other signal pulses may be present on the signal wire, however, they will not coincide with the reference pulse for the device in question and it will remain deactivated.

It will be understood by the person skilled in the art that the wiring loom may also consist of a combined supply an signal wire 204 and a ground wire wherein the signalling pulse are transmitted along the supply wire 204, which would further reduce the amount of wiring used in the cable system. Additionally, it will be understood that the wiring loom may consist of a load supply wire for supply power to the device wherein the device represents a large inductive load, a control supply wire for supplying power to the circuitry of the cable system of the invention, a signal wire and a ground wire. Finally, the wiring loom may consist of a load supply wire, a combined control supply and signal wire and a ground wire.

It will be understood that the receiver assembly 104 may be formed integrally with the device 112 it is to control, such that removal of the device 112 from the vehicle also removes the receiver assembly 104 from the vehicle. In this way, any replacement devices being installed in the vehicle would require a receiver assembly 104 according to the invention.

Throughout the specification, the term vehicle will be understood to comprise any form of road vehicle such as a car, van, bus, truck, motorcycle or the like; all terrain vehicles such as quad bikes and the like; farm machinery such as tractors, combine harvesters and the like; engineering vehicles such as construction vehicles and other plant vehicles; rail vehicles such as trains, trams or the like; aircraft such as helicopters, airplanes and the like; marine vehicles such as ferries, pleasure craft, container ships and the like; and military vehicles such as tanks or armoured personnel carriers and the like.

Throughout the specification, the term cable will be understood to refer to any form of multi-stranded signal carrying assembly wherein the data or signal carried by one strand will not appreciably interfere with the data or signal carried by any other stand. It will be understood to refer to a wire cable, a fibre optic cable or any other form of suitable cable.

It will be understood by the person skilled in the art that while the invention is well suited for use in vehicles, it is not limited to use therein and may be used for the control of electrical devices in other environments such as manufacturing plants or other industrial installations and the like where it may be desired to control a number of devices from a location spaced apart therefrom.

In the specification the terms 'comprise', 'comprises', 'comprised' and 'comprising' or any variation thereof and the terms 'included', 'includes', 'included' or 'including' or any variation thereof are considered to be totally interchangeable and they should all be afforded the widest possible interpretation.

The invention is not limited to the embodiment herein described, but may be varied in both construction and detail within the terms of the claims.

## Claims

1. A cable system (100) for a vehicle, the cable system (100) being suitable for providing an operative link between a plurality of devices (110) in the vehicle and their associated activation switches (112), which associated activation switches (112) are spaced apart from the devices (110), the cable system (100) comprising
a wiring loom (108) comprising a single signal wire (204);
a timer assembly (106) adapted to generate a periodic clock pulse on the signal wire (204);
for each device (110), a receiver assembly (104) connectable to the device (110) and a transmitter assembly (102) connectable to the device's associated activation switch (112), wherein for each device (110),
the transmitter assembly (102) is adapted to receive the periodic clock pulse and, on receipt of the clock pulse, to generate one signal pulse on the signal wire (204) after a preset interval when the activation switch is activated; and
the receiver assembly (104) is adapted to receive the periodic clock pulse and the signal pulse after the preset interval and to activate the device if the signal pulse is present;
wherein the clock pulse and signal pulse are of substantially equal amplitude.

2. A cable system (100) as claimed in claim 1 in which each transmitter assembly (102) comprises an isolation unit adapted to isolate the transmitter assembly (102) from the signal line between clock pulses.

3. A cable system (100) as claimed in any preceding claim in which the wiring loom (108) consists of a ground wire, a supply wire and the signal wire (204).

4. A cable system (100) as claimed in any preceding claim in which the wiring loom (108) consists of a ground wire and a combined supply and signal wire (204).

5. A cable system (100) as claimed in any preceding claim in which the wiring loom (108) consists of a ground wire, a load supply wire, a control supply wire and signal wire (204).

6. A cable system (100) as claimed in any preceding claim in which the timer assembly (106) comprises an astable multivibrator.

7. A cable system (100) as claimed in any preceding claim in which each transmitter assembly (102) and receiver assembly (104) comprises a monostable multivibrator.

8. A cable system (100) as claimed in any of claims 2 to 7 in which the isolation means comprises a monostable multivibrator.

9. A cable system (100) for a vehicle as claimed in claim 1, the cable system comprising a receiver assembly (104) for use with the cable assembly; the receiver assembly comprising
means to receive the clock pulse;
means to receive the signal pulse, of substantially equal amplitude to the clock pulse, after the preset interval; and
means to activate the device (110) on receipt of the signal pulse.

10. A cable system (100) for a vehicle as claimed in claim 9 in which the means to receive the signal pulse comprise
means to generate a reference pulse after the preset interval;
and means to combine the reference pulse and signal pulse in an AND operation.

11. A cable system (100) for a vehicle as claimed in claim 10 in which the means to generate a reference pulse comprise
a first pulse generator adapted to generate a first pulse, on receipt of the clock pulse, of the duration of the preset interval;
a second pulse timer adapted to generate a second pulse, on receipt of the clock pulse, of the duration of the preset interval plus a pulse width;
and means to combine the first pulse and second pulse in an XOR operation.

12. A cable system (100) for a vehicle as claimed in claim 1, the cable system comprising a transmitter assembly (102) for use with the cable assembly; the transmitter assembly comprising
means to receive the clock pulse;
means to generate a signal pulse after a preset interval comprising
a first pulse generator adapted to generate a first pulse, on receipt of the clock pulse, of the duration of the preset interval,
a second pulse timer adapted to generate a second pulse, on receipt of the clock pulse, of a duration of the preset interval plus a pulse width;
and means to combine the first pulse and second pulse in an XOR operation.

13. A method for controlling a plurality of devices (110) in a vehicle, the method adapted to operate in a vehicle comprising the plurality of devices (110), each device (110) having an associated activation switch (112) spaced apart therefrom, the devices (110) and their switches (112) being connected by a wiring loom (108) having a single signal wire (204), each device (110) being connected to the signal wire (204) by way of a receiver assembly (104) and each activation switch (112) being connected to the signal wire (204) by way of a transmitter assembly (102), the signal wire (204) being further connected to a timer assembly (106), the steps of the method comprising
the receiver assembly (104) receiving a periodic clock pulse, having an amplitude, from the timer assembly (106), on the signal wire (204);
the receiver assembly (104) reading a signal from the signal wire (204) at a preset interval after the clock pulse;
the receiving assembly ascertaining if a signal pulse is present on the signal wire (204) at the preset interval after the clock pulse;
if a signal pulse is present, the receiving assembly activating the device (110),
wherein the signal pulse is of substantially equal amplitude to the clock pulse.

14. A method as claimed in claim 13 in which the step of the receiving assembly ascertaining if a signal pulse is present on the signal wire (204) comprises
the receiving assembly generating a reference pulse at the preset interval after the clock pulse;
and ascertaining if the reference pulse coincides with a signal pulse on the signal wire (204).

15. A method for controlling a plurality of devices (110) in a vehicle, the method adapted to operate in a vehicle comprising the plurality of devices (110), each device (110) having an associated activation switch (112), spaced apart therefrom, the devices (110) and their switches (112) being connected by a wiring loom (108) having a single signal wire (204), each device (110) being connected to the signal wire (204) by way of a receiver assembly (104) and each activation switch (112) being connected to the signal wire (204) by way of a transmitter assembly (102), the signal wire (204) being further connected to a timer assembly (106), the steps of the method comprising
the timer assembly (106) transmitting a periodic clock pulse, having an amplitude, on the signal wire (204),
then for each transmitter assembly (102) and receiver assembly (104) pair,
the transmitter assembly (102) receiving the clock pulse and transmitting a signal pulse, of substantially equal amplitude, on the signal wire (204), a preset interval after the clock pulse;
the receiver assembly (104) receiving the clock pulse and reading a signal from the signal wire (204), a preset interval after the clock pulse;
wherein the preset interval is the same for the transmitter assembly (102) and receiver assembly (104) pair within a pair,
the receiving assembly ascertaining if a signal pulse is present on the signal wire (204) at the preset interval after the clock pulse;
if a signal pulse is present, the receiving assembly activating the device (110).

## Patentansprüche

1. Kabelsystem (100) für ein Fahrzeug, wobei das Kabelsystem (100) geeignet ist, eine operative Verbindung zwischen einer Vielzahl von Vorrichtungen (110) im Fahrzeug und ihren zugeordneten Aktivierungsschaltern (112) bereitzustellen, wobei die zugeordneten Aktivierungsschalter (112) von den Vorrichtungen (110) beabstandet sind, wobei das Kabelsystem (100) folgendes umfasst:
einen Kabelbaum (108) mit einem einzelnen Signaldraht (204);
eine Zeitgeber-Baugruppe (106), die so angepasst ist, dass sie auf dem Signaldraht (204) einen periodischen Taktimpuls erzeugt; für jede Vorrichtung (110) eine mit der Vorrichtung (110) verbindbare Empfängeranordnung (104) und eine Senderanordnung (102), die mit dem zugeordneten Aktivierungsschalter (112) der Vorrichtung verbindbar ist,
wobei für jede Vorrichtung (110)
die Senderanordnung (102) so angepasst ist, dass sie den periodischen Taktimpuls empfängt, und beim Empfang des Taktimpulses nach einem voreingestellten Intervall einen Signalimpuls auf dem Signaldraht (204) erzeugt, wenn der Aktivierungsschalter aktiviert wird; und
die Empfängeranordnung (104) so angepasst ist, dass sie den periodischen Taktimpuls und den Signalimpuls nach einem voreingestellten Intervall empfängt und die Vorrichtung aktiviert, wenn der Signalimpuls vorhanden ist;
wobei der Taktimpuls und der Signalimpuls eine im Wesentlichen gleiche Amplitude aufweisen.

2. Kabelsystem (100) nach Anspruch 1, wobei jede Senderanordnung (102) eine Isoliereinheit umfasst, die so angepasst ist, dass sie die Senderbaugruppe (102) zwischen den Taktimpulsen von der Signalleitung isoliert.

3. Kabelsystem (100) nach einem der vorhergehenden Ansprüche, wobei der Kabelbaum (108) einen Erdungsdraht, einen Versorgungsdraht und den Signaldraht (204) umfasst.

4. Kabelsystem (100) nach einem der vorhergehenden Ansprüche, wobei der Kabelbaum (108) einen Erdungsdraht und einen kombinierten Versorgungs- und Signaldraht (204) umfasst.

5. Kabelsystem (100) nach einem der vorhergehenden Ansprüche, wobei der Kabelbaum (108) einen Erdungsdraht, einen Ladeversorgungsdraht, einen Kontrollversorgungsdraht und einen Signaldraht (204) umfasst.

6. Kabelsystem (100) nach einem der vorhergehenden Ansprüche, wobei die Zeitgeber-Baugruppe ((106) einen instabilen Multivibrator umfasst.

7. Kabelsystem (100) nach einem der vorhergehenden Ansprüche, wobei jede Senderanordnung (102) und Empfängeranordnung (104) einen monostabilen Multivibrator umfasst.

8. Kabelsystem (100) nach einem der Ansprüche 2 bis 7, wobei das Isoliermittel einen monostabilen Multivibrator umfasst.

9. Kabelsystem (100) für ein Fahrzeug nach Anspruch 1, wobei das Kabelsystem eine Empfängeranordnung (104) zur Verwendung mit der Kabelbaugruppe umfasst; wobei die Empfängeranordnung folgendes umfasst:
Hilfsmittel zum Empfangen des Taktimpulses;
Hilfsmittel zum Empfangen des Signalimpulses mit im Wesentlichen gleicher Amplitude zum Taktimpuls nach dem voreingestellten Intervall; und
Hilfsmittel zum Aktivieren der Vorrichtung (110) beim Empfang des Signalimpulses.

10. Kabelsystem (100) für ein Fahrzeug nach Anspruch 9, wobei die Hilfsmittel zum Empfangen des Signalimpulses folgendes umfassen:
Hilfsmittel zum Erzeugen eines Referenzimpulses nach dem voreingestellten Intervall;
und Hilfsmittel zum Kombinieren des Referenzimpulses und des Signalimpulses in einem UND-Vorgang.

11. Kabelsystem (100) für ein Fahrzeug nach Anspruch 10, wobei die Hilfsmittel zum Erzeugen eines Referenzimpulses folgendes umfassen:
einen ersten Impulsgenerator, der so angepasst ist, dass er beim Empfang des Taktimpulses einen ersten Impuls von der Dauer des voreingestellten Intervalls erzeugt;
einen zweiten Impulszeitgeber, der so angepasst ist, dass er beim Empfang des Taktimpulses einen zweiten Impuls von der Dauer des voreingestellten Intervalls plus einer Impulsbreite erzeugt;
und Hilfsmittel zum Kombinieren des ersten Impulses und zweiten Impulses in einem XODER-Vorgang.

12. Kabelsystem (100) für ein Fahrzeug nach Anspruch 1, wobei das Kabelsystem eine Senderanordnung (102) zur Verwendung mit der Kabelbaugruppe umfasst; wobei die Senderanordnung folgendes umfasst:
Hilfsmittel zum Empfangen des Taktimpulses;
Hilfsmittel zum Erzeugen eines Signalimpulses nach einem voreingestellten Intervall umfassend
einen ersten Impulsgenerator, der so angepasst ist, dass er beim Empfang des Taktimpulses einen ersten Impuls von der Dauer des voreingestellten Intervalls erzeugt,
einen zweiten Impulszeitgeber, der so angepasst ist, dass er beim Empfang des Taktimpulses einen zweiten Impuls von der Dauer des voreingestellten Intervalls plus einer Impulsbreite erzeugt;
und Hilfsmittel zum Kombinieren des ersten Impulses und zweiten Impulses in einem XODER-Vorgang.

13. Verfahren zum Steuern einer Vielzahl von Vorrichtungen (110) in einem Fahrzeug, wobei das Verfahren zum Betrieb in einem Fahrzeug umfassend die Vielzahl von Vorrichtungen (110) angepasst ist, wobei jede Vorrichtung (110) einen zugeordneten, von dieser beabstandeten Aktivierungsschalter (112) aufweist, wobei die Vorrichtungen (110) und deren Schalter (112) über einen Kabelbaum (108) mit einem einzelnen Signaldraht (204) verbunden sind, wobei jede Vorrichtung (110) über eine Empfängeranordnung (104) mit dem Signaldraht (204) verbunden ist und jeder Aktivierungsschalter (112) über eine Senderanordnung (102) mit dem Signaldraht (204) verbunden ist, wobei der Signaldraht (204) außerdem mit einer Zeitgeber-Baugruppe (106) verbunden ist, wobei die Schritte des Verfahrens folgende umfassen:
Empfangen eines periodischen Taktimpulses mit einer Amplitude durch die Empfängeranordnung (104) von der Zeitgeber-Baugruppe (106) auf dem Signaldraht (204);
Lesen eines Signals vom Signaldraht (204) durch die Empfängeranordnung (104) zum voreingestellten Intervall nach dem Taktimpuls;
Ermitteln durch die Empfängeranordnung, ob ein Signalimpuls auf dem Signaldraht (204) zum voreingestellten Intervall nach dem Taktimpuls vorhanden ist;
falls ein Signalimpuls vorhanden ist, Aktivieren der Vorrichtung (110) durch die Empfängeranordnung,
wobei der Signalimpuls im Wesentlichen die gleiche Amplitude wie der Taktimpuls hat.

14. Verfahren nach Anspruch 13, wobei der Schritt des Ermittelns durch die Empfängeranordnung, ob ein Signalimpuls auf dem Signaldraht (204) vorhanden ist, folgendes umfasst:
Erzeugen eines Referenzimpulses durch die Empfängeranordnung zum voreingestellten Intervall nach dem Taktimpuls;
und Ermitteln, ob der Referenzimpuls mit einem Signalimpuls auf dem Signaldraht (204) übereinstimmt.

15. Verfahren zum Steuern einer Vielzahl von Vorrichtungen (110) in einem Fahrzeug, wobei das Verfahren zum Betrieb in einem Fahrzeug mit einer Vielzahl von Vorrichtungen (110) angepasst ist, wobei jede Vorrichtung (110) einen zugeordneten, von dieser beabstandeten Aktivierungsschalter (112) aufweist, wobei die Vorrichtungen (110) und deren Schalter (112) über einen Kabelbaum (108) mit einem einzelnen Signaldraht (204) verbunden sind, wobei jede Vorrichtung (110) über eine Empfängeranordnung (104) mit dem Signaldraht (204) verbunden ist und jeder Aktivierungsschalter (112) über eine Senderanordnung (102) mit dem Signaldraht (204) verbunden ist, wobei der Signaldraht (204) außerdem mit einer Zeitgeber-Baugruppe (106) verbunden ist, wobei die Schritte des Verfahrens folgende umfassen:
Senden eines periodischen Taktimpulses mit einer Amplitude auf dem Signaldraht (204) durch die Zeitgeber-Baugruppe (106),
dann für jedes Paar Senderanordnung (102) und Empfängeranordnung (104)
Empfangen des Taktimpulses und Senden eines Signalimpulses mit im Wesentlichen gleicher Amplitude durch die Senderanordnung (102) auf dem Signaldraht (204) zum voreingestellten Intervall nach dem Taktimpuls;
Empfangen des Taktimpulses und Lesen eines Signals vom Signaldraht (204) durch die Empfängeranordnung (104) zum voreingestellten Intervall nach dem Taktimpuls;
wobei das voreingestellte Intervall innerhalb eines Paares für das Senderanordnungs- (102) und Empfängeranordnungspaar (104) gleich ist,
Ermitteln der Empfängeranordnung, ob ein Signalimpuls auf dem Signaldraht (204) zum voreingestellten Intervall nach dem Taktimpuls vorhanden ist;
Aktivieren der Vorrichtung (110) durch die Empfängeranordnung, falls ein Signalimpuls vorhanden ist.

## Revendications

1. Système de câble (100) pour un véhicule, le système de câble (100) étant approprié pour fournir une liaison fonctionnelle entre une pluralité de dispositifs (110) dans le véhicule et leurs commutateurs d'activation associés (112), lesquels commutateurs d'activation associés (112) sont espacés des dispositifs (110), le système de câble (100) comprenant un harnais de câbles (108) comprenant un fil de signal unique (204) ;
un ensemble minuteur (106) conçu pour générer une impulsion d'horloge périodique sur le fil de signal (204) ;
pour chaque dispositif (110), un ensemble récepteur (104) pouvant être relié au dispositif (110) et un ensemble émetteur (102) pouvant être relié au commutateur d'activation associé du dispositif (112),
dans lequel pour chaque dispositif (110),
l'ensemble émetteur (102) est conçu pour recevoir l'impulsion d'horloge périodique et, lors de la réception de l'impulsion d' horloge, pour générer une impulsion de signal sur le fil de signal (204) après un intervalle prédéfini lorsque le commutateur d'activation est activé ; et
l'ensemble récepteur (104) est conçu pour recevoir l'impulsion d'horloge périodique et l'impulsion de signal après l'intervalle prédéfini et pour activer le dispositif si l'impulsion de signal est présente ;
dans lequel l'impulsion d'horloge et l'impulsion de signal sont d'amplitude sensiblement égale.

2. Système de câble (100) selon la revendication 1 dans lequel chaque ensemble émetteur (102) comprend une unité d'isolation conçue pour isoler l'ensemble émetteur (102) de la ligne de signal entre des impulsions d'horloge.

3. Système de câble (100) selon une quelconque revendication précédente dans lequel le harnais de câbles (108) est constitué d'un fil de terre, d'un fil d'alimentation et du fil de signal (204) .

4. Système de câble (100) selon une quelconque revendication précédente dans lequel le harnais de câbles (108) est constitué d'un fil de terre et d'un fil d'alimentation et de signal combiné (204) .

5. Système de câble (100) selon une quelconque revendication précédente dans lequel le harnais de câbles (108) est constitué d'un fil de terre, d'un fil d'alimentation de charge, d'un fil d'alimentation de commande et d'un fil de signal (204).

6. Système de câble (100) selon une quelconque revendication précédente dans lequel l'ensemble minuteur (106) comprend un multivibrateur astable.

7. Système de câble (100) selon une quelconque revendication précédente dans lequel chaque ensemble émetteur (102) et ensemble récepteur (104) comprend un multivibrateur astable.

8. Système de câble (100) selon l'une quelconque des revendications 2 à 7 dans lequel le moyen d'isolation comprend un multivibrateur astable.

9. Système de câble (100) pour un véhicule selon la revendication 1, le système de câble comprenant un ensemble récepteur (104) pour une utilisation avec l'ensemble câble ; l'ensemble récepteur comprenant
des moyens pour recevoir l'impulsion d'horloge ;
des moyens pour recevoir l'impulsion de signal, d'amplitude sensiblement égale à l'impulsion d'horloge, après l'intervalle prédéfini ; et
des moyens pour activer le dispositif (110) lors de la réception de l'impulsion de signal.

10. Système de câble (100) pour un véhicule selon la revendication 9 dans lequel les moyens pour recevoir l'impulsion de signal comprennent
des moyens pour générer une impulsion de référence après l'intervalle prédéfini ;
et des moyens pour combiner l'impulsion de référence et l'impulsion de signal dans une opération AND.

11. Système de câble (100) pour un véhicule selon la revendication 10 dans lequel les moyens pour générer une impulsion de référence comprennent
un premier générateur d'impulsions conçu pour générer une première impulsion, lors de la réception de l'impulsion d'horloge, de la durée de l'intervalle prédéfini ;
un second minuteur à impulsion conçu pour générer une seconde impulsion, lors de la réception de l'impulsion d'horloge, de la durée de l'intervalle prédéfini plus une largeur d'impulsion ; et des moyens pour combiner la première impulsion et la seconde impulsion dans une opération XOR.

12. Système de câble (100) pour un véhicule selon la revendication 1, le système de câble comprenant un ensemble émetteur (102) pour une utilisation avec l'ensemble câble ; l'ensemble émetteur comprenant
des moyens pour recevoir l'impulsion d'horloge ;
des moyens pour générer une impulsion de signal après un intervalle prédéfini comprenant
un premier générateur d'impulsions conçu pour générer une première impulsion, lors de la réception de l'impulsion d'horloge, de la durée de l'intervalle prédéfini,
un second minuteur à impulsion conçu pour générer une seconde impulsion, lors de la réception de l'impulsion d'horloge, d'une durée de l'intervalle prédéfini plus une largeur d'impulsion ; et des moyens pour combiner la première impulsion et la seconde impulsion dans une opération XOR.

13. Procédé de commande d'une pluralité de dispositifs (110) dans un véhicule, le procédé étant conçu pour fonctionner dans un véhicule comprenant la pluralité de dispositifs (110), chaque dispositif (110) ayant un commutateur d'activation associé (112) espacé de celui-ci, les dispositifs (110) et leurs commutateurs (112) étant reliés par un harnais de câbles (108) ayant un fil de signal unique (204), chaque dispositif (110) étant relié au fil de signal (204) au moyen d'un ensemble récepteur (104) et chaque commutateur d'activation (112) étant relié au fil de signal (204) au moyen d'un ensemble émetteur (102), le fil de signal (204) étant en outre relié à un ensemble minuteur (106), les étapes du procédé comprenant
la réception par l'ensemble récepteur (104) d'une impulsion d'horloge périodique, ayant une amplitude, à partir de l'ensemble minuteur (106), sur le fil de signal (204) ;
la lecture par l'ensemble récepteur (104) d'un signal à partir du fil de signal (204) au niveau d'un intervalle prédéfini après l'impulsion d'horloge ;
la vérification par l'ensemble de réception du fait qu'une impulsion de signal est présente ou non sur le fil de signal (204) au niveau de l'intervalle prédéfini après l'impulsion d'horloge ;
si une impulsion de signal est présente, l'activation par l'ensemble de réception du dispositif (110),
dans lequel l'impulsion de signal est d'amplitude sensiblement égale à l'impulsion d'horloge.

14. Procédé selon la revendication 13 dans lequel l'étape de vérification par l'ensemble de réception du fait qu'une impulsion de signal est présente ou non sur le fil de signal (204) comprend
la génération par l'ensemble de réception d'une impulsion de référence au niveau de l'intervalle prédéfini après l'impulsion d'horloge ;
et la vérification du fait que l'impulsion de référence coïncide ou non avec une impulsion de signal sur le fil de signal (204).

15. Procédé de commande d'une pluralité de dispositifs (110) dans un véhicule, le procédé étant conçu pour fonctionner dans un véhicule comprenant la pluralité de dispositifs (110), chaque dispositif (110) ayant un commutateur d'activation associé (112), espacé de celui-ci, les dispositifs (110) et leurs commutateurs (112) étant reliés par un harnais de câbles (108) ayant un fil de signal unique (204), chaque dispositif (110) étant relié au fil de signal (204) au moyen d'un ensemble récepteur (104) et chaque commutateur d'activation (112) étant relié au fil de signal (204) au moyen d'un ensemble émetteur (102), le fil de signal (204) étant en outre relié à un ensemble minuteur (106), les étapes du procédé comprenant
l'émission par l'ensemble minuteur (106) d'une impulsion d'horloge périodique, ayant une amplitude, sur le fil de signal (204),
ensuite, pour chaque paire d'ensemble émetteur (102) et d'ensemble récepteur (104),
la réception par l'ensemble émetteur (102) de l'impulsion d'horloge et l'émission d'une impulsion de signal, d'amplitude sensiblement égale, sur le fil de signal (204), un intervalle prédéfini après l'impulsion d'horloge ;
la réception par l'ensemble récepteur (104) de l'impulsion d'horloge et la lecture d'un signal à partir du fil de signal (204), un intervalle prédéfini après l'impulsion d'horloge ; dans lequel l'intervalle prédéfini est le même pour la paire d'ensemble émetteur (102) et d'ensemble récepteur (104) à l'intérieur d'une paire,
la vérification par l'ensemble de réception du fait qu'une impulsion de signal est présente ou non sur le fil de signal (204) au niveau de l'intervalle prédéfini après l'impulsion d'horloge ;
si une impulsion de signal est présente, l'activation par l'ensemble de réception du dispositif (110).
